# EUROPÄISCHE PATENTSCHRIFT

(11) **EP 2 856 566 B1**
(45) Veröffentlichungstag und Bekanntmachung des Hinweises auf die Patenterteilung: **18.11.2015**
(21) Anmeldenummer: 13717490.0
(22) Anmeldetag: 17.04.2013
(51) Int. Cl.: H01R 13/28, F03D 11/00

(54) **ELEKTRISCHES VERBINDUNGSSYSTEM**
ELECTRIC CONNECTION SYSTEM
SYSTÈME DE RACCORDEMENT ÉLECTRIQUE

(30) Priorität: 25.05.2012 DE 102012010277
(43) Veröffentlichungstag der Anmeldung: 08.04.2015
(73) Patentinhaber: Auto-Kabel Management GmbH, 79688 Hausen i.W. (DE)
(72) Erfinder: SCHUMACHER, Jens, 79688 Hausen im Wiesental (DE)
(74) Vertreter: Cohausz & Florack
(86) Internationale Anmeldenummer: PCT/EP2013/058006
(87) Internationale Veröffentlichungsnummer: WO 2013/174581

(56) Entgegenhaltungen:
- DE-A1- 2 705 798
- DE-A1-102009 033 168
- DE-A1-102010 045 921
- US-A- 2 171 726

## Beschreibung

Der Gegenstand betrifft ein elektrisches Verbindungssystem einer Einrichtung zur Gewinnung elektrische Energie aus regenerativen Quellen, insbesondere einer Windkraftanlage mit einem an einem Ende eines ersten Kabels anordenbaren ersten Verbindungsstück, und einem an einem Ende eines zweiten Kabels anordenbaren zweiten Verbindungsstück.

Elektrische Energiegewinnungseinrichtungen, wie beispielsweise Windkraftanlagen, werden heutzutage mit Kupfer- oder Aluminiumkabeln bestückt. Aufgrund des steigenden Kupferpreises setzt sich jedoch die Bestückung mit Aluminiumkabeln immer mehr durch. Insbesondere bei Windkraftanlagen, die zwischen 50m und 200m hoch sind, werden große Mengen Kabel benötigt, so dass das Einsparpotential bei der Verwendung von Aluminiumkabeln erheblich ist.

Durch die große Höhe der Windkraftanlagen bedingt ist es jedoch unmöglich, die im Turm der Windkraftanlage angeordneten Generatoren mit einem einzigen Kabel mit dem im Sockel der Anlage angeordneten Umrichter zu verbinden. Daher werden in einzelnen Turmsegmenten jeweils Kabel vormontiert. Um die Kabel der einzelnen Segmente miteinander zu verbinden, müssen diese an den Segmentgrenzen elektrisch leitend verbunden werden. Solange Kupferkabel zum Einsatz kommen, ist ein Vercrimpen oder Verschrauben der Kabel unproblematisch, da sich auf der Kupferoberfläche kein die elektrische Leitfähigkeit negativ beeinflussendes Material ablagert, das während der Dauer des Betriebes der Windkraftanlage zu einer Verminderung der elektrischen Leitfähigkeit der Verbindung führen könnte.

Bei der Verwendung von Aluminiumkabeln ist dies jedoch anders. Eine Crimpverbindung muss vor Umwelteinflüssen geschützt werden. Ferner muss verhindert werden, dass sich an den Übergangsstellen Aluminiumoxid bildet, welches den Übergangswiderstand erheblich erhöht. Bei Kabeln, die mehrere 10 A oder sogar mehreren 100 A tragen, ist ein elektrischer Übergangswiderstand stets mit hoher Verlustleistung verbunden. Daher muss versucht werden, den elektrischen Übergangswiderstand zwischen den Kabeln an der Verbindungsstelle so gering wie möglich zu gestalten und auf der anderen Seite eine möglichst schnell montierbare Verbindungstechnologie zur Verfügung zu stellen.

Heutzutage wird aber an den Sektionsgrenzen ein Vercrimpen der Kabel der jeweiligen Sektionen vorgeschlagen. Hierbei wird eine Crimphülse auf die Kabel aufgeschraubt. Hierzu muss der Mechaniker in den Turm klettern, an der Sektionsgrenze die Kabel ablängen und abisolieren. Anschließend muss der Mechaniker die abisolierten Enden der Kabel mit einer Leitpaste bestreichen. Hierdurch soll verhindert werden, dass sich an den Oberflächen der Aluminiumlitzen Aluminiumoxid bildet. Anschließend muss der Mechaniker die Crimphülse auf die freien Kabelenden aufschieben und in einem aufwendigen Prozess mit vielen Schrauben mit den Kabeln verschrauben. Die so geschilderte Montage ist zeit- und kostenintensiv. Außerdem ist die Güte der elektrischen Verbindung nicht stabil, dass heißt, dass über die Zeit der elektrische Übergangswiderstand steigt, da die Leitpaste nicht vollständig die Bildung von Aluminiumoxid verhindern kann.

Außerdem ist eine ausreichend große Zugentlastung an der Verbindungsstelle vorzusehen. Bei Kabelsträngen von mehreren zehn Metern Länge treten enorme Zugkräfte an der Verbindungsstelle auf. Daher ist neben einer elektrisch gut leitenden Verbindung auch eine mechanisch stabile Verbindung notwendig. Dies wird heutzutage mit Hilfe von massiven Crimpverbindungen und Verschraubungen der Kabelseelen sichergestellt.

Die US 2 171 726 offenbart ein Verbindungssystem entsprechend dem Oberbegriff von Anspruch 1.

Aus diesem Grunde lag dem Gegenstand die Aufgabe zugrunde, ein elektrisches Verbindungssystem zur Verfügung zu stellen, welches in besonders einfacher Weise montierbar ist und dabei gleichzeitig eine mechanische Zugentlastung an der Verbindungsstelle gewährleistet.

Diese Aufgabe wird gegenständlich durch ein Verbindungssystem nach Anspruch 1 gelöst.

Es ist erkannt worden, dass das Vercrimpen und Verschrauben der Aluminiumkabel fehlerträchtig ist und sich dabei kein genügend kleiner Übergangswiderstand realisieren lässt. Auch ist erkannt worden, dass das bekannte Montageverfahren zu zeitaufwendig ist. Da die mechanische Sicherung gegenüber Zugkräften in Richtung der Kabellängsachsen gewährleistet sein muss, müssen die Verschraubungen mit Schrauben mit großem Durchmesser durchgeführt werden. Während der Montage ist es notwendig, die Zugkräfte zu kompensieren und die Kabel an der Verbindungsstelle zu fixieren. Hierzu sind aufwändige Sicherungsmaßnahmen vor der Montage notwendig, die zeitintensiv sind. Für den Monteur ist es aufwändig, die Kabel in der zu verbindenden Position zu fixieren. All diese Probleme werden gegenständlich gelöst.

Die Verbindungsstücke haben an den jeweiligen Kabeln zugewandten Seiten Anschlussflächen. An den Anschlussflächen der jeweiligen Verbindungsstücke können die Kabel vorzugsweise stoffschlüssig angeordnet werden. Insbesondere in einem vorkonfektionierten Zustand können die Kabel an den Anschlussflächen angeschweißt sein. Hierzu eignen sich insbesondere Reibschweißverfahren, wie nachfolgend noch dargestellt werden wird. Andererseits sind jedoch auch Widerstandschweißverfahren geeignet, um Verbindungen zwischen den stirnseitigen Enden der Kabel und den Verbindungsstücken bzw. den Anschlussflächen der Verbindungsstücke herzustellen.

Das erste Verbindungsstück erstreckt sich in Richtung einer Anschlussfläche für ein Ende des ersten Kabels. In dieser Erstreckungsrichtung bildet das erste Verbindungsstück eine Längsachse aus.

Das zweite Verbindungsstück erstreckt sich in Richtung einer zweiten Anschlussfläche für ein zweites Ende des ersten Kabels oder ein Ende des zweiten Kabels. In dieser Erstreckungsrichtung bildet das zweite Verbindungsstück ebenfalls eine Längsachse aus.

Das erste Verbindungsstück hat eine Aufnahme zur Aufnahme eines Vorsprungs. Der Vorsprung ist an dem zweiten Verbindungsstück gebildet. Durch Ineinanderschieben des Vorsprungs in die Aufnahme ist es möglich, eine elektrisch leitende Verbindung zwischen den beiden Verbindungsstücken und somit zwischen den an den Verbindungsstücken angeordneten Kabeln herzustellen.

Eine besonders leichte Montage ist dann möglich, wenn die Aufnahme durch eine sich in einer Ebene senkrecht zur ersten Längsachse erstreckende Nut gebildet ist, wobei die Nut in ihrer Erstreckungsrichtung das erste Verbindungsstück durchbricht. Es kann sich in dem ersten Verbindungsstück eine Nut erstrecken, die quer zur Längsachse verläuft. Diese Nut erstreckt sich über das gesamte Verbindungsstück und durchbricht dieses an den jeweiligen Seiten in ihrer Erstreckungsrichtung.

Der Vorsprung erstreckt sich in einer Ebene senkrecht zur zweiten Längsachse.

Im verbundenen Zustand ist der Vorsprung in der Nut eingesetzt. Dann verlaufen Nut und Vorsprung in derselben Erstreckungsrichtung. Vorzugsweise sind dann die Längsachsen parallel, vorzugsweise kollinear zueinander.

Eine erste Nutwand ist in Richtung der ersten Längsachse geneigt ist und eine Mantelfläche des Vorsprungs ist in Richtung der zweiten Längsachse geneigt. Hierdurch wird ein ineinander Haken von Vorsprung und Nut deutlich erleichtert. In der Art eines Schnappverschlusses kann der Vorsprung über eine Nutwand geschoben werden, um dann anschließend in der Nut einzurasten. Durch die Neigung der Nutwand und die Neigung des Vorsprungs ist ein übereinander Schieben der Verbindungsstücke erleichtert, da diese ineinander "gleiten" können. Dies erleichtert dem Monteur das Verbinden der Verbindungsstücke miteinander.

Es ist erkannt worden, dass ein elektrisches Verbinden der Verbindungsstücke durch Ineinanderstecken von Vorsprung und Aufnahme dann leicht ist, wenn Vorsprung und Aufnahme in einer Ebene senkrecht zur Längsachse der Verbindungsstücke verlaufen. In diesem Fall kann ein Monteur die Kabel an den Sektionsgrenzen besonders einfach miteinander montieren. Es ist lediglich notwendig, die Verbindungsstücke miteinander zu verbinden, wobei dies durch Ineinanderschieben von Vorsprung und Aufnahme geschieht.

Dadurch, dass Vorsprung und Aufnahme in einer Ebene senkrecht zur Längsachse verlaufen, ergibt sich eine natürliche Zugentlastung an der Verbindungsstelle. Der Vorsprung liegt an einer Nutwand an. Die Nutwand nimmt die Zugkräfte, die in Richtung der Längsachse wirken, auf, und leitet diese in das mit dem ersten Verbindungsstück verbundene Kabel ein.

Es hat sich gezeigt, dass die Verbindungsstücke besonders einfach miteinander verbunden werden können und gleichzeitig eine sehr gute Zugentlastung gewährleistet werden kann, wenn das erste Verbindungsstück und das zweite Verbindungsstück jeweils eine Nut und einen Vorsprung aufweisen. Somit kann jeweils ein Vorsprung eines Verbindungsstücks in der jeweils dazu korrespondierenden Nut des anderen Verbindungsstücks verrasten und eine Zugentlastung gewähren. Eine Nut ist regelmäßig durch einen Nutgrund sowie zwei Nutwände gebildet. Es ist erkannt worden, dass jeweils eine Nutwand auch als Vorsprung dienen kann, indem der die Nutwand bildende Steg den Vorsprung bildet. Hierbei ist besonders von Vorteil, wenn der auf der der jeweiligen Anschlussfläche abgewandten Seite des Verbindungsstück angeordnete Steg, der die Nutwand bildet, den Vorsprung bildet.

Die Zugentlastung in Längsrichtung wird durch das Aneinanderliegen von Vorsprung und Nut zwischen den Verbindungsstücken gewährleistet. In Richtung der Längsachse wirkende Kräfte werden von dem Vorsprung auf die Nutwand bzw. den die Nutwand bildenden Steg geleitet und somit in das jeweils andere Verbindungsstück bzw. Kabel.

Um die elektrische Verbindung zwischen den Verbindungsstücken gegenüber Scher- und Querkräften zu sichern, wird gemäß der Erfindung vorgeschlagen, dass im verbunden Zustand der Vorsprung in der Nut durch ein Sicherungselement befestigt ist. Das Sicherungselement ist bevorzugt derart, dass dieses eine Druckkraft auf den Vorsprung in Richtung des Nutgrundes ausübt. Hierdurch wird verhindert, dass der Vorsprung aus der Nut heraus bewegt werden kann. Das Sicherungselement fixiert den Vorsprung in der Nut.

Gemäß der Erfindung wird vorgeschlagen, dass das Sicherungselement den Nutgrund durchstößt und in dem Vorsprung befestigt ist. Auch ist es möglich, dass das Sicherungselement den Vorsprung durchstößt und in dem Nutgrund befestigt ist. Dadurch, dass das Sicherungselement entweder den Nutgrund oder den Vorsprung durchstößt und in dem jeweils korrespondieren Vorsprung bzw. Nutgrund befestigt ist, kann in besonders einfacher Weise eine in Richtung des Nutgrunds wirkende Kraft auf den Vorsprung ausgeübt werden.

Besonders vorteilhaft ist dies möglich, wenn das Sicherungselement eine Schraube ist. Es ist erkannt worden, dass bei der Verwendung von Aluminium oder Aluminiumlegierungen für die Sicherungselemente ein Sichern mittels einer Schraube problematisch ist, wenn die Schraube mit einem zu großen Drehmoment angezogen wird. In diesem Fall kann es zu einem Fließen des Aluminiums kommen und die mittels der Schraube miteinander befestigten Teile können sich voneinander lösen. Auch können Gewinde abgeschert werden. Aus diesem Grunde wird vorgeschlagen, dass eine Abreißschraube oder eine mit einem definierten Drehmoment befestigte Schraube zum Befestigen der Sicherungselemente verwendet wird. Mit Hilfe eines Drehmomentsschlüssels lässt sich eine Schraube mit einem definierten Drehmoment anziehen, so dass verhindert wird, dass das Gewinde an der Schraube oder den Verbindungsstücken abgeschert wird.

Besonders einfach lässt sich der Vorsprung in die Nut schieben, wenn die in Richtung der ersten Längsachse geneigte Nutwand auf der dem Kabel zugewandten Seite der Nut angeordnet ist. In diesem Fall ist der dazu korrespondierende Vorsprung auf der dem Kabel abgewandten Seite geneigt und lässt sich somit besonders einfach über die Nutwand schieben und in der Nut einrasten. Auch wird vorgeschlagen, dass die in Richtung der ersten Längsachse geneigten Nutwand auf der dem Kabel abgewandten Seite der Nut angeordnet ist.

In diesem Fall ist die Nutwand von dem Kabel wegweisend geneigt. Im vorherigen Fall ist die Nutwand ausgehend vom Nutgrund in Richtung des Kabels geneigt.

Auch wird vorgeschlagen, dass die Nutwand auf der dem Kabel abgewandten Seite der Nut parallel zur Ebene senkrecht zur Längsachse verläuft. Auch ist es möglich, dass die Nutwand auf der dem Kabel zugewandten Seite der Nut parallel zur Ebene senkrecht zur Längsachse verläuft.

Gemäß einem Ausführungsbeispiel wird vorgeschlagen, dass die Verbindungsstücke aus Aluminium oder Legierungen davon gebildet sind und dass die Kabel aus Aluminium, Kupfer oder Legierungen gebildet sind. Die Verwendung von Aluminium erlaubt ein besonders kostengünstiges Verkabeln von Windkraftanlagen, da Aluminium erheblich günstiger als Kupfer ist. Durch die Verwendung von Aluminium ergibt sich darüber hinaus ein erheblicher Gewichtsvorteil, so dass die an der Verbindung auftretenden Zugkräfte geringer sind.

Um zu verhindern, dass der Übergangswiderstand an den Verbindungsstücken auf Grund von Aluminiumoxid negativ beeinflusst wird, wird vorgeschlagen, dass die Verbindungsstücke metallisch beschichtet sind. Eine metallische Beschichtung kann hierbei ein Unternickeln und/oder ein Verzinnen sein. Dies verhindert die Bildung von Aluminiumoxid auf der Oberfläche der Verbindungsstücke, wenn diese aus Aluminium gebildet sind. Eine metallische Beschichtung mit Silber oder anderer Metalle ist ebenfalls möglich, insbesondere wenn die Übergangswiderstände gering gehalten werden müssen.

Gemäß einem Ausführungsbeispiel wird vorgeschlagen, dass das Verbindungsstück mit dem Kabel mittels Stumpfschweißen, insbesondere mittels Reibschweißen stoffschlüssig verbunden ist. Wie bereits eingangs erläutert, ist eine Montage besonders einfach, wenn die Verbindungsstücke keilförmig ineinander greifen, wie auch vorgeschlagen wird. Durch das keilförmige Ineinandergreifen werden gleichzeitig eine elektrische Verbindung und eine mechanische Zugentlastung ermöglicht.

Um die Verbindung der Verbindungsstücke zu sichern, wird vorzugsweise eine Isolationshülse um die Verbindungsstücke gelegt. Um der Isolationshülse zu ermöglichen, Zugkräfte in Längsrichtung aufzunehmen, muss diese an den Verbindungsstücken anliegen. Aus diesem Grunde weisen die Verbindungsstücke gemäß einem Ausführungsbeispiel in einer Ebene senkrecht zur Längsachse verlaufende, zumindest teilweise um die Verbindungsstücke umlaufende Flansche auf. An diesen Flanschen können Ringschultern von Isolationshülsen anliegen.

Die Isolationshülse verhindert, dass auf die elektrische Verbindung an den Verbindungsstücken Umwelteinflüsse wirken. Die Isolationshülse kann so ausgestaltet sein, dass sie die elektrische Verbindung an den Verbindungsstücken abdichtet, so dass Feuchtigkeit nicht an die elektrische Verbindung heranlangen kann. Hierzu ist es beispielsweise möglich, dass die Isolationshülse feuchtigkeitsdicht an der Isolation des Kabels im Bereich des Kabelendes anliegt. Dies kann beispielsweise durch die Verwendung eines O-Rings realisiert werden. Auch ist es möglich, dass ein Schrumpfschlauch um die Isolationshülse gelegt wird und an die Isolation des Kabels angeschrumpft wird.

Gemäß einem Ausführungsbeispiel wird vorgeschlagen, dass eine Isolationshülse an den Flanschen angreift und die Verbindungsstücke in Längsrichtung aneinander hält.

Gemäß einem Ausführungsbeispiel wird vorgeschlagen, dass die Isolationshülse zweiteilig ist, wobei ein erster Teil an dem Flansch des ersten Verbindungsstücks angeordnet ist und ein zweiter Teil an dem Flansch des zweiten Verbindungsstücks angeordnet ist und wobei die Teile verliersicher miteinander mechanisch verbindbar sind, derart, dass im verbundenen Zustand eine durch die Teile auf die Verbindungsstücke parallel zur Längsachse ausgeübte Kraft die Verbindungsstücke in Längsachse aufeinander zu drückt. Hierdurch entsteht eine weitere Zugentlastung in Längsrichtung.

Die Teile der Isolationshülse lassen sich beispielsweise miteinander verschrauben oder sind als Bajonettverschluss gebildet, so dass ein Teil in dem anderen Teil verrastet.

Zum Befestigen der Isolationshülse bzw. der Teile miteinander müssen diese, wie beschrieben, vorzugsweise miteinander verschraubt werden. Um dieses Verschrauben zu erleichtern, ist an zumindest einem Teil eine Nutmutter zur Aufnahme eines Hakenschlüssels angeordnet, wobei mittels der Nutmutter das erste Teil mit dem zweiten Teil verschraubbar ist.

Auch wird vorgeschlagen, dass das isolierende Gehäuse durch einen Metallkäfig, insbesondere einen Stahlblechkäfig umgeben ist. Es hat sich gezeigt, dass durch die Verwendung eines Metallkäfigs zum Einen eine erhöhte mechanische Festigkeit gegenüber Zugkräften gewährleistet werden kann und zum Anderen die Verbindungen gegenüber elektromagnetischer Störungen unempfindlicher gemacht werden kann. Der Metallkäfig greift vorzugsweise an dem isolierenden Gehäuse im Bereich der Flansche an, so dass auch über den Metallkäfig Zugkräfte aufgenommen werden können.

Eine weitere mechanische Fixierung des Vorsprungs in der Nut kann dadurch erreicht werden, dass am Nutgrund ein sich in Längsachse erstreckender Hinterschnitt vorgesehen ist. Der Hinterschnitt ist vorzugsweise in der Nutwand im Bereich des Nutgrunds angeordnet und weist vorzugsweise von dem Kabel des Verbindungsstücks fort.

Ein hierzu korrespondierender Rasthaken kann an einer Spitze des Vorsprungs angeordnet sein und den Hinterschnitt hintergreifen. Hierdurch können Zugkräfte normal zur Fläche des Nutgrunds durch den Hinterschnitt und den Rasthaken kompensiert werden. Dies erschwert ein herauslösen des Vorsprungs normal zum Nutgrund aus der Nut.

Auch ist es möglich, dass die vorkonfektionierten Kabel in den jeweiligen Sektionen kurz vor der Sektionsgrenze abgelängt und mit einem der Verbindungsstücke versehen sind. Dann kann die Sektionsgrenze mit einem Verbindungskabel überbrückt werden, welches jeweils zu dem an den Sektionsgrenzen vorkonfektionierten Kabel komplementäre Verbindungsstücke aufweist. Der Mechaniker muss dann lediglich das Verbindungskabel in die Nut oder den Vorsprung der jeweiligen Kabelenden der vorkonfektionierten Kabel einschieben und erhält somit eine mechanische und elektrische Verbindung der Kabel untereinander.

Die Breite des Nutgrunds und/oder die Neigung einer Nutwand kann bei einem mehrphasigen Verbindungssystem für jede Phase unterschiedlich sein. So kann beispielsweise bei einem 3-Phasensystem jeder Phase ein Vorsprung- Nut Paar mit unterschiedlichen Breiten/Neigungswinkeln zugewiesen sein. Insbesondere bei Windkraftanlagen werden pro Phase drei bis sieben Kabel verwendet, so dass neun bis 21 Kabel pro Sektion vorkonfektioniert sind. Diese Kabel müssen phasenrichtig mit den jeweiligen Kabeln der anderen Sektionen verbunden werden. Um eine Fehlverbindung zu vermeiden, kann jede Phase mit einem eigenen Paar aus Verbindungsstücken ausgestattet sein, wobei die Verbindungsstücke der einzelnen Phasen untereinander nicht komplementär sind und nicht zueinander passen. Der Mechaniker kann dann die Montage durchführen, ohne zu befürchten, dass er eine phasenunrichtige Verbindung herstellt. Es ist sichergestellt, dass die zueinander gehörenden Kabel auch elektrisch miteinander kontaktiert werden.

Bei der Verwendung von Aluminiumkabeln ist zu bevorzugen, dass die Verbindungsstücke ebenfalls aus Aluminium gebildet sind. Dies hat den Vorteil, dass keine Übergangswiderstände oder Kontaktkorrosionen an den Übergängen zwischen den Kabeln und den Verbindungsstücken entstehen. Um zu verhindern, dass sich auf der Oberfläche der Verbindungsstücke Aluminiumoxid bildet, wird vorgeschlagen, dass die Oberfläche der Verbindungsstücke verzinnt ist. Auch ist es möglich, dass.die Oberfläche zunächst vernickelt und anschließend verzinnt ist. Durch die Unternickelung wird eine dauerhafte Beschichtung erreicht und die Verzinnung ermöglicht die Erzielung eines geringen Kontaktwiderstandes.

Um die Verbindungsstücke sicher mit den Kabeln zu verbinden, wird vorgeschlagen, dass ein abisoliertes Kabelende in einer Hülse angeordnet ist. Insbesondere wenn die Verbindungsstücke aus Kupfer und die Kabel aus Aluminium gebildet sind, ist eine sichere Verbindungstechnik notwendig. Die Hülse kann so um die Kabelenden gepresst sein, dass die einzelnen Litzen oder Drähte des abisolierten Kabels fest verpresst sind. Anschließend kann das stirnseitige Ende der Hülse abgeschnitten oder überfräßt werden, so dass die Kabelenden an den stirnseitigen Enden der Hülse enden und frei von Aluminiumoxid sind. Anschließend kann das Verbindungsstück, welches eine dem Kabelende zugewandte Anschlussfläche aufweisen kann, mit der Hülse und dem Kabelende entlang der Anschlussfläche verschweißt werden.

Hierbei kann beispielsweise ein Reibschweißen, insbesondere ein Rotationsreibschweißen angewandt werden. Auch ist es möglich, dass ein Ultraschallschweißen oder ein Widerstandsschweißen verwendet wird, um die Verbindungsstücke mit der Hülse und den Kabelenden zu verschweißen.

Auch wird vorgeschlagen, dass die Hülse aus Aluminium gebildet ist. Hierbei kann auch die Hülse verzinnt und/oder vernickelt sein, wie zuvor beschrieben wurde.

Eine besonders hohe elektrische Leitfähigkeit wird bei der Verwendung von Aluminiumkabeln erreicht, wenn diese eine hohe Reinheit aufweisen. Insbesondere die Verwendung von Al 99,5 hat sich als vorteilhaft erwiesen. Jedoch ist auch die Verwendung von höher- oder geringerwertigem Aluminium möglich.

Um die Montage zu erleichtern, sollten die Aluminiumkabel, die einen großen Kabelquerschnitt aufweisen, möglichst flexibel sein. Aus diesem Grunde wird auch vorgeschlagen, dass die Aluminiumkabel aus weichgeglühtem Aluminium hergestellt werden. Hierdurch lassen sich die Kabel, insbesondere die an den Kabelenden angeordneten Verbindungsstücke, besonders leicht bewegen und somit miteinander verbinden und zusammenschieben.

Gemäß einem Ausführungsbeispiel wird vorgeschlagen, dass die Kabel Teil eines Energieleitungsstrangs einer Windkraftanlage sind. Insbesondere eignet sich das elektrische Verbindungssystem beim Verbinden von Kabeln über Sektionsgrenzen hinweg. Auch eignet sich das elektrische Verbindungssystem zum Vorkonfektionieren von in den jeweiligen Sektionen angeordneten Kabeln.

Nachfolgend wird der Gegenstand anhand einer ein Ausführungsbeispiel zeigenden Zeichnung näher erläutert. In der Zeichnung zeigen:
- Fig. 1: ein Windkraftrad mit gegenständlichen Verbindungen;
- Fig. 2: eine schematische Schnittansicht eines Verbindungssystems;
- Fig. 3: eine Ansicht eines ersten Verbindungsstücks;
- Fig. 4: eine Ansicht eines zweiten Verbindungsstücks;
- Fig. 5: eine schematische Schnittansicht eines weiteren Verbindungssystems;
- Fig.6: eine Ansicht eines weiteren Verbindungsstücks
- Fig. 7: eine schematische Schnittansicht eines weiteren Verbindungssystems;;
- Fig. 8: eine schematische Schnittansicht eines Verbindungssystems gemäß der Erfindung
- Fig. 9: eine weitere Schnittansicht eines erfindungsgemäßen Verbindungssystems;

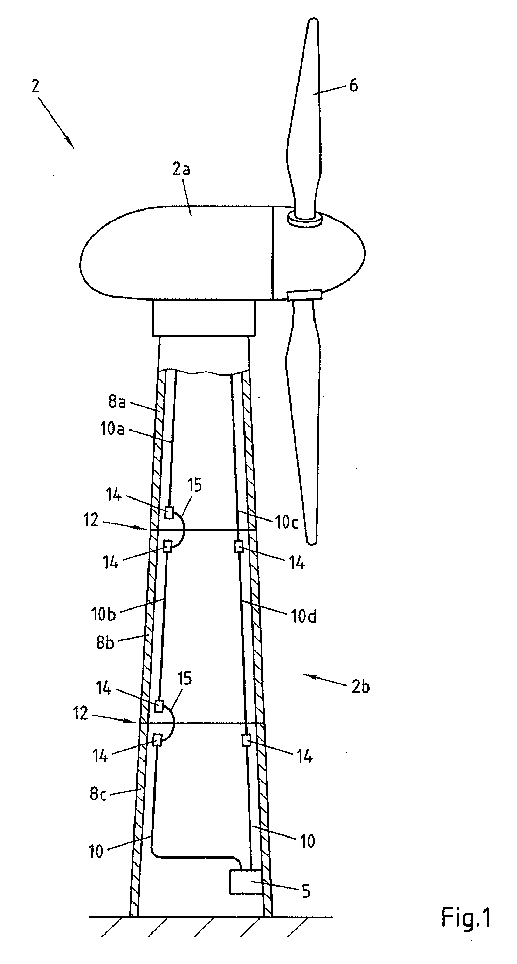

Fig. 1 zeigt eine Windkraftanlage 2 mit einer Gondel 2a und einem Windrad 6. Die Gondel 2a ist drehbar auf einem aus Sektionen 8a, 8b, 8c gebildeten Turm 2b gelagert. In jeder Sektion 8a-c sind Kabelstränge 10 angeordnet, über die die elektrische Energie von dem in der Gondel 2a angeordneten Generator (nicht gezeigt) zum dem im Sockel des Turms 2 angeordneten Umrichter 5 geleitet wird.

Die Kabelstränge 10 sind beispielhaft dargestellt. So ist in der Sektion 8a beispielsweise ein Kabelstrang 10a und ein Kabelstrang 10c angeordnet. Pro Phase können mehrere Kabelstränge 10 vorgesehen sein, so dass es durchaus vorkommen kann, dass in einer Sektion 8a pro Phase jeweils drei Kabelstränge 10a vorgesehen sein können. Auch in einer Sektion 8b sind die jeweiligen Kabel 10b, 10d vorgesehen. In der Sektion 8c sind weitere Kabelstränge 10 vorgesehen.

Für die Montage einer Windkraftanlage 2 werden die Sektionen 8 vorkonfektioniert mit Kabeln 10 geliefert. Die Kabel 10 sind in den Sektionen 8 bereits zu Beginn der Montage enthalten und müssen an den Sektionsgrenzen 12 elektrisch und mechanisch miteinander verbunden werden. Die Verbindung der Kabel 10 miteinander wird über die Verbindungssysteme 14 realisiert, wie sie nachfolgend noch näher beschrieben werden.

Einerseits ist es möglich, dass vor der Sektionsgrenze 12 die Kabel 10a, 10b abgelängt sind und jeweils mit einem Verbindungsstück verbunden sind. Ein Überbrückungskabel 16 kann die Kabel 10a, 10b über die Sektionsgrenze 12 hinweg verbinden. Das Überbrückungskabel 15 kann zu den jeweils an den Kabelenden angeordneten Verbindungsstücken komplementäre Verbindungsstücke aufweist.

Andererseits ist es möglich, dass ein erstes Kabel 10c ein erstes Verbindungsstück 16 aufweist und ein zweites Kabel 10d ein hierzu komplementäres zweites Verbindungsstück 18. Die Kabel 10c, 10d können so konfektioniert sein, dass sie über die Sektionsgrenze 12 hinaus ragen. Bei der Montage kann das Verbindungssystem 14 an der Sektionsgrenze 12 zusammengesteckt werden, so dass die Kabel 10c und 10d unmittelbar mechanisch und elektrisch miteinander verbunden werden.

Die Verbindungssysteme 14 können aus zwei Verbindungsstücken, die komplementär zueinander geformt sind, gebildet sein.

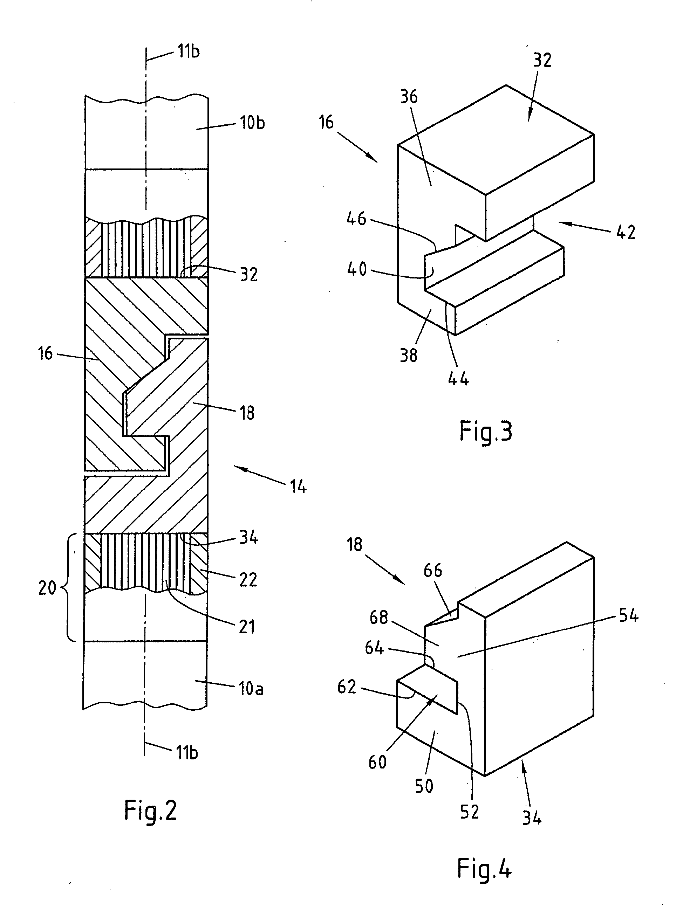

In der Fig. 2 ist ein Kabelende eines Kabels 10a zu erkennen, welches ein abisoliertes Ende 20 aufweist. Um das abisolierte Ende 20 ist eine Hülse 22 gelegt. Das Kabel 10a ist vorzugsweise aus Aluminiumlitzen oder -drähten gebildet, welche durch die ebenfalls aus Aluminium gebildete Hülse 22 verpresst werden. Hierzu kann die Hülse 22 auf die Litzen aufgepresst werden. Anschließend kann die Hülse 22 zusammen mit den Litzen stirnseitig abgeschliffen, abgefräst oder abgeschnitten werden. Die so gebildete Stirnseite 24 kann dann im Anschluss mit der Stirnseite des Verbindungsstücks 18 mittels Schweißen, vorzugsweise Rotationsreibschweißen, stoffschlüssig verbunden werden. Die Stirnseite 24 kann eine Anschlussfläche für das Kabel 10a bilden.

Das Verbindungsstück 18 ist vorzugsweise aus Aluminium gebildet. Die Hülse 22 als auch das Verbindungsstück 18 können unternickelt und verzinnt sein. Beim Verschweißen des Verbindungsstücks 18 mit der Hülse 22 und den freien Enden der Litzen 2 werden die Oberflächenbeschichtungen aufgebrochen. Ein Aluminiumoxid, welches sich gegebenenfalls auf den Oberflächen gebildet haben kann, wird ebenfalls beim Schweißen aufgebrochen. Es entsteht eine sortenreine Verbindung zwischen den Litzen 2 und dem Verbindungsstück 18.

Eine entsprechende Verbindung ist auch an dem Verbindungsstück 16 an dem Kabel 10b möglich.

Die an die Kabel 10a, 10b angeschweißten Verbindungsstücke 16, 18 sind in der Figur 2 dargestellt. Zu erkennen ist, dass die Verbindungsstücke 16, 18 ineinander gehakt sind. Die Verbindungsstücke 16, 18 erstrecken sich jeweils parallel zur Längsachse 11a, 11b eines jeweiligen Kabels 10a, 10b. Das Verbindungsstück 16 ist an der Verbindungsfläche 32 mit dem Kabel 10b verbunden. Das Verbindungsstück 18 ist an der Verbindungsfläche 34 mit dem Kabel 10a verbunden. Ausgehend von den Verbindungsflächen 32, 34 erstrecken sich die jeweiligen Verbindungsstücke 16, 18 parallel zu den Längsachsen 11a, 11b, die im gezeigten, verbundenen Zustand des Verbindungssystems 14 kollinear zueinander sind.

Fig. 3 zeigt eine Ansicht des Verbindungsstücks 16. Das Verbindungsstück 16 ist einstückig aus einem Flachteil gebildet. Ausgehend von der Verbindungsfläche 32 hat das Verbindungsstück 16 einen ersten Steg 36 und einen zweiten Steg 38, welche über einen Nutgrund 40 miteinander verbunden sind. Die Stege 36, 38 und der Nutgrund 40 bilden eine Nut 42. Die Nut 42 ist begrenzt durch den Nutgrund 40 und die Nutwände 44, 46. Wie zu erkennen ist, ist die in dem dem Kabel zugewandten Steg 36 angeordnete Nutwand 46 in Richtung der Verbindungsfläche 32 geneigt. Ausgehend vom Nutgrund 40 öffnet sich die Nut 42 durch die Neigung der Nutwand 46.

Der in Figur 3 dargestellte Steg 38 kann auch als Vorsprung zum Eingriff in eine Nut eines Verbindungsstücks 18 dienen, wie aus der Figur 2 zu erkennen ist.

In der Figur 4 ist ein zweites Verbindungsstück 18 dargestellt. Auch das zweite Verbindungsstück 18 ist ein Flachteil und weist ausgehend von der Verbindungsfläche 34 in Richtung der Längsachse 11b einen ersten Steg 50, einen Nutgrund 52 und einen zweiten Steg 54 auf.

Die Stege 50, 54 und der Nutgrund 52 bilden eine Nut 60 aus. Die Nut 60 hat neben dem Nutgrund 52 zwei Nutwände 62, 64.

Der Steg 54 hat eine Mantelfläche 66, die auf der der Verbindungsfläche 34 abgewandten Seite des Verbindungsstücks 18 angeordnet ist. Die Mantelfläche 66 ist in Richtung der Längsache 11a geneigt. Der Steg 54 bildet einen Vorsprung 68 aus. Zum Verbinden der Verbindungsstücke 16, 18 miteinander, wird das Verbindungsstück 18 in Richtung der Längsachse 11a auf das Verbindungsstück 16 zu bewegt. Die Mantelfläche 66 kommt in Kontakt mit dem Steg 38. Dadurch dass die Mantelfläche 66 geneigt ist, lässt sich das Verbindungsstück 18 leicht auf den Steg 38 schieben. Der Steg 54 gleitet dann über den Steg 38 bis der Steg 54 bzw. der Vorsprung 68 in die Nut 40 eingreift. Parallel dazu greift der Steg 38 in die Nut 60 ein. Die Verbindungsstücke 16, 18 verhaken ineinander wie in der Figur 2 zu erkennen ist.

In den Figuren 3 und 4 ist ferner zu erkennen, dass die Nuten 42, 60 sich in einer Richtung parallel zu einer Ebene senkrecht zu den Längsachsen 11a, 11b erstrecken und die jeweiligen Verbindungsstücke 16, 18 vollständig durchbrechen und nicht durch laterale Seitenwände begrenzt sind.

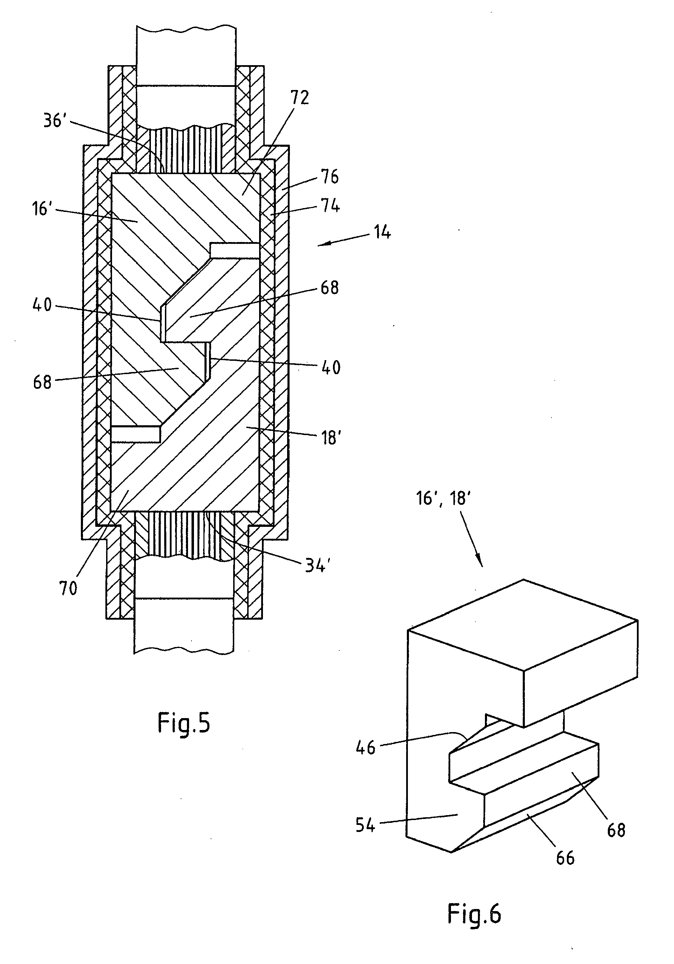

Figur 5 zeigt ein weiteres Beispiel eines Verbindungssystems 14. Die Verbindungsstücke 16', 18' entsprechen in etwa den Verbindungsstücken 16, 18. Wie zu erkennen ist sind die Verbindungsstücke 16', 18' jedoch kongruent und/oder komplementär zueinander.

Figur 6 zeigt eine Ansicht dieser Verbindungsstücke 16', 18'. Zu erkennen ist, dass die von der Anschlussfläche wegweisende Mantelfläche 66 in Richtung der Längsachse 11a, 11b geneigt ist und der Steg 54 den Vorsprung 68 bildet. Ferner ist zu erkennen dass die der Anschlussfläche 11a, 11b zugewandte Nutwand 46 in Richtung der Längsachse geneigt ist. Wie in der Figur 5 zu erkennen ist, rastet der jeweilige Vorsprung 68 des jeweiligen Verbindungsstücks 16', 18' in der jeweiligen Nut 40 des jeweils anderen Verbindungsstücks 16', 18' ein.

In der Figur 5 ist ferner zu erkennen, dass die Verbindungsstücke 16', 18' Flansche 70, 72 aufweisen. An diesen Flanschen 70, 72 liegt eine Isolationshülse 74 an. Die Isolationshülse 74 kann als Schraubverschluss oder Bajonettverschluss gebildet sein.

Über die Isolationshülse 74 ist ein Metallkäfig 76 gestülpt, der ebenfalls an den Flanschen 70, 72, anliegt. Mittels des Metallkäfigs 76 wird eine elektromagnetische Schirmung des Verbindungssystems 14 gewährleistet.

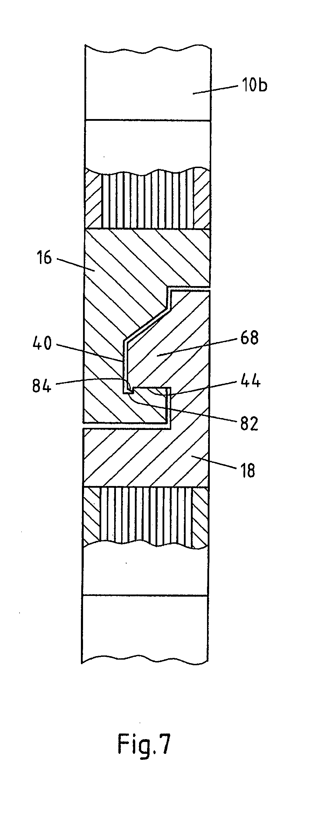

Figur 7 zeigt ein Verbindungssystem mit Verbindungsstücken 16, 18 in etwa entsprechend der Figur 2.

Zu erkennen ist, dass in der Nutwand 44 des Verbindungsstücks 16 ein Hinterschnitt 82 vorgesehen ist. Der Hinterschnitt 82 verläuft in Richtung der Nut und erstreckt sich vom Kabel 10b wegweisend in der Nutwand 44. In den Hinterschnitt 82 greift ein an dem Vorsprung 68 angeordneter Rasthaken 84. Durch das Verrasten des Rasthakens 84 in den Hinterschnitt 82 wird verhindert dass das Verbindungsstück 18 aus dem Verbindungsstück 16 normal zum Nutgrund 40 entfernt werden kann.

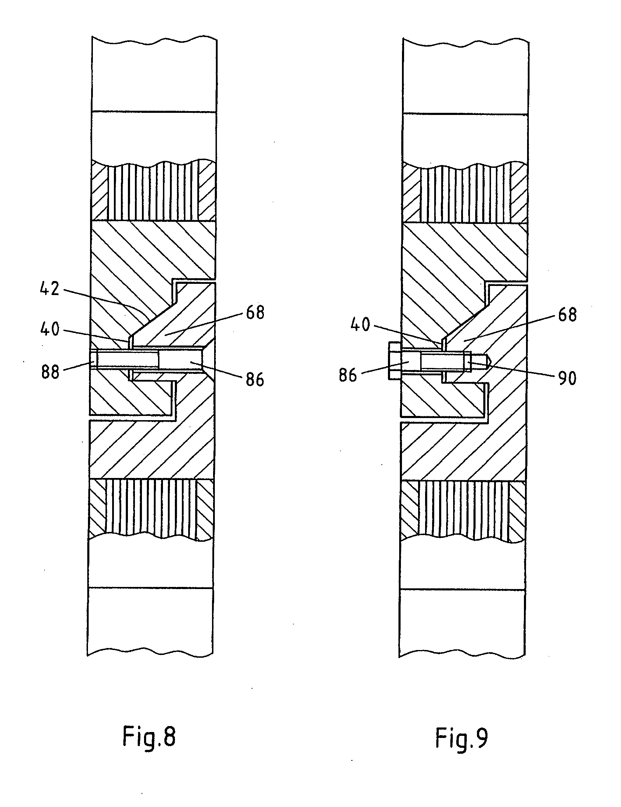

Eine weitere Sicherung eines Entfernen des Verbindungsstücks 18 aus dem Verbindungsstück 16 bzw. des Vorsprungs 68 aus der Nut 42 ist in Figur 8 dargestellt. Hier ist zu erkennen, dass in dem Vorsprung 68 eine Schraube 86 angeordnet ist, die in einem Gewinde 88 im Nutgrund 40 der Nut 42 verschraubt ist. Auch die Schraube 86 verhindert ein Entfernen des Vorsprungs 68 aus der Nut 42 normal zum Nutgrund 40.

Figur 9 zeigt eine weitere Möglichkeit, bei der, anders als in Figur 8 die Schraube 86 nicht den Vorsprung 68 durchstößt sondern den Nutgrund 40. Die Schraube 86 ist in einem Gewinde 90 am Vorsprung 68 verschraubt.

## Patentansprüche

1. Elektrisches Verbindungssystem für eine Einrichtung zur Gewinnung elektrische Energie aus regenerativen Quellen, insbesondere einer Windkraftanlage mit
- einem ersten mit einem Ende eines ersten Kabels verbindbaren Verbindungsstück, wobei eine Längsachse des ersten Kabels eine erste Längsachse bestimmt und
- einem zweiten mit einem Ende eines zweiten Kabels oder einem zweiten Ende des ersten Kabels verbindbaren Verbindungsstück, wobei eine Längsachse des ersten oder zweiten Kabels eine zweite Längsachse bestimmt,
- wobei das erste Verbindungsstück eine für einen Vorsprung des zweiten Verbindungsstücks gebildete Aufnahme und das zweite Verbindungsstück den zu der Aufnahme korrespondierenden Vorsprung aufweist, und
- wobei zur Bildung einer elektrisch leitenden Verbindung zwischen den Verbindungsstücken der Vorsprung in der Aufnahme anordbar ist,
- wobei die Aufnahme durch eine sich in einer Ebene senkrecht zur ersten Längsachse erstreckende Nut gebildet ist, wobei die Nut in ihrer Erstreckungsrichtung das erste Verbindungsstücks durchbricht,
- wobei der Vorsprung sich in einer Ebene senkrecht zur zweiten Längsachse erstreckt,
- wobei eine erste Nutwand in Richtung der ersten Längsachse geneigt ist und dass eine Mantelfläche des Vorsprungs in Richtung der zweiten Längsachse geneigt ist, **dadurch gekennzeichnet,**
- **dass** im verbundenen Zustand der Vorsprung in der Nut durch ein Sicherungselement befestigt ist, und
- **dass** das Sicherungselement den Nutgrund durchstößt und in dem Vorsprung befestigt ist oder dass das Sicherungselement den Vorsprung durchstößt und in dem Nutgrund befestigt ist.

2. Elektrisches Verbindungssystem nach Anspruch 1, **dadurch gekennzeichnet, dass** das erste Verbindungsstück und das zweite Verbindungsstück jeweils eine Nut und/oder einen Vorsprung aufweisen, derart, dass ein auf der dem jeweiligen Kabel abgewandten Seite des Verbindungsstücks angeordneter, eine Nutwand bildender Steg jeweils den Vorsprung bildet.

3. Elektrisches Verbindungssystem nach einem der vorangehenden Ansprüche, **dadurch gekennzeichnet, dass** das Sicherungselement eine Schraube, insbesondere eine Abreißschraube oder eine mit einem definierten Drehmoment befestigte Schraube ist.

4. Elektrisches Verbindungssystem nach einem der vorangehenden Ansprüche, **dadurch gekennzeichnet, dass** die in Richtung der ersten Längsachse geneigte Nutwand auf der dem Kabel abgewandten Seite der Nut angeordnet ist oder dass die in Richtung der ersten Längsachse geneigte Nutwand auf der dem Kabel zugewandten Seite der Nut angeordnet ist.

5. Elektrisches Verbindungssystem nach einem der vorangehenden Ansprüche, **dadurch gekennzeichnet, dass** die Nutwand auf der dem Kabel abgewandten Seite der Nut parallel zur Ebene senkrecht zur Längsachse verläuft oder dass die Nutwand auf der dem Kabel zugewandten Seite der Nut parallel zur Ebene senkrecht zur Längsachse verläuft.

6. Elektrisches Verbindungssystem nach einem der vorangehenden Ansprüche, **dadurch gekennzeichnet, dass** die Verbindungsstücke aus Aluminium oder Legierungen davon gebildet sind und dass die Kabel aus Aluminium, Kupfer oder Legierungen davon gebildet sind.

7. Elektrisches Verbindungssystem nach einem der vorangehenden Ansprüche, **dadurch gekennzeichnet, dass** die Verbindungsstücke metallisch beschichtet, insbesondere unternickelt und/oder verzinnt sind.

8. Elektrisches Verbindungssystem nach einem der vorangehenden Ansprüche, **dadurch gekennzeichnet, dass** das Verbindungsstück mit dem Kabel mittels Stumpfschweißen, insbesondere mittels Reibschweißen, stoffschlüssig verbunden sind.

9. Elektrisches Verbindungssystem nach einem der vorangehenden Ansprüche, **dadurch gekennzeichnet, dass** die Verbindungsstücke keilförmig ineinander greifen.

10. Elektrisches Verbindungssystem nach einem der vorangehenden Ansprüche, **dadurch gekennzeichnet, dass** die Verbindungsstücke durch ein isolierendes Gehäuse umgeben sind.

11. Elektrisches Verbindungssystem nach einem der vorangehenden Ansprüche, **dadurch gekennzeichnet, dass** das isolierende Gehäuse an dem jeweiligen Kabel zugewandten Flanschen der Verbindungsstücke angeordnet ist, derart, dass durch das Gehäuse in Richtung der Längsachse wirkende Zugkräfte aufnehmbar sind.

12. Elektrisches Verbindungssystem nach einem der vorangehenden Ansprüche, **dadurch gekennzeichnet, dass** das isolierende Gehäuse durch einen Metallkäfig, insbesondere einen Stahlblechkäfig umgeben ist.

13. Elektrisches Verbindungssystem nach einem der vorangehenden Ansprüche, **dadurch gekennzeichnet, dass** am Nutgrund ein sich in Längsachse erstreckender Hinterschnitt vorgesehen ist.

14. Elektrisches Verbindungssystem nach einem der vorangehenden Ansprüche, **dadurch gekennzeichnet**, der Vorsprung an seiner Spitze einen zu dem Hinterschnitt korrespondierenden Rasthaken hat.

## Claims

1. Electrical connection system for a means for generating electrical energy from regenerative sources, in particular a wind turbine, comprising
- a first connection piece which can be joined to an end of a first cable, a longitudinal axis of the first cable determining a first longitudinal axis and
- a second connection piece which can be joined to an end of a second cable or to a second end of the first cable, a longitudinal axis of the first or second cable determining a second longitudinal axis,
- wherein the first connection piece has a receptacle, formed for a projection of the second connection piece, and the second connection piece has the projection corresponding to the receptacle, and
- wherein the projection can be arranged in the receptacle to form an electrically conductive connection between the connection pieces,
- wherein the receptacle is formed by a groove extending in a plane perpendicular to the first longitudinal axis, the groove passing through the first connection piece in its extension direction,
- wherein the projection extends in a plane perpendicular to the second longitudinal axis,
- wherein a first groove wall is inclined in the direction of the first longitudinal axis and in that a lateral surface of the projection is inclined in the direction of the second longitudinal axis,
**characterized in that**
- in the connected state, the projection is fastened in the groove by a securing element, and
- the securing element passes through the base of the groove and is fastened in the projection or **in that** the securing element passes through the projection and is fastened in the base of the groove.

2. Electrical connection system according to Claim 1, **characterized in that** the first connection piece and the second connection piece each have a groove and/or a projection such that a web arranged on the side of the connection piece facing away from the respective cable and forming a groove wall forms the respective projection.

3. Electrical connection system according to any of the preceding claims, **characterized in that** the securing element is a screw, in particular a shear bolt or a screw fastened with a defined torque.

4. Electrical connection system according to any of the preceding claims, **characterized in that** the groove wall inclined in the direction of the first longitudinal axis is arranged on the side of the groove facing away from the cable or **in that** the groove wall inclined in the direction of the first longitudinal axis is arranged on the side of the groove facing the cable.

5. Electrical connection system according to any of the preceding claims, **characterized in that** the groove wall extends on the side of the groove facing away from the cable parallel to the plane perpendicular to the longitudinal axis or **in that** the groove wall extends on the side of the groove facing towards the cable parallel to the plane perpendicular to the longitudinal axis.

6. Electrical connection system according to any of the preceding claims, **characterized in that** the connection pieces are formed from aluminium or alloys thereof and **in that** the cables are formed from aluminium, copper or alloys thereof.

7. Electrical connection system according to any of the preceding claims, **characterized in that** the connection pieces are provided with a metallic coating, in particular are provided with a lower nickel layer and/or are tinplated.

8. Electrical connection system according to any of the preceding claims, **characterized in that** the connection pieces are joined to the cable in a material-uniting manner by butt welding, in particular by friction welding.

9. Electrical connection system according to any of the preceding claims, **characterized in that** the connection pieces engage in one another in a wedge-shaped manner.

10. Electrical connection system according to any of the preceding claims, **characterized in that** the connection pieces are surrounded by an insulating housing.

11. Electrical connection system according to any of the preceding claims, **characterized in that** the insulating housing is arranged on flanges, facing the respective cable, of the connection pieces such that tensile forces acting in the direction of the longitudinal axis can be absorbed by the housing.

12. Electrical connection system according to any of the preceding claims, **characterized in that** the insulating housing is surrounded by a metal cage, in particular by a sheet metal cage.

13. Electrical connection system according to any of the preceding claims, **characterized in that** an undercut extending in the longitudinal axis is provided in the base of the groove.

14. Electrical connection system according to any of the preceding claims, **characterized in that** the projection has on its tip a locking hook corresponding to the undercut.

## Revendications

1. Système de jonction électrique pour un équipement servant à la production d'énergie électrique à partir de sources d'énergie renouvelables, en particulier d'une centrale éolienne comprenant
- une première pièce de jonction pouvant être reliée à une extrémité d'un premier câble, où un axe longitudinal du premier câble détermine un premier axe longitudinal, et
- une deuxième pièce de jonction pouvant être reliée à une extrémité d'un deuxième câble ou à une deuxième extrémité du premier câble, où un axe longitudinal du premier ou du deuxième câble détermine un deuxième axe longitudinal,
- où la première pièce de jonction présente un logement formé pour une partie saillante de la deuxième pièce de jonction, et la deuxième pièce de jonction présente la partie saillante correspondant au logement, et
- où, pour la formation d'une jonction électriquement conductrice entre les pièces de jonction, la partie saillante peut être disposée dans le logement,
- où le logement est formé par une rainure s'étendant dans un plan perpendiculaire au premier axe longitudinal, où la rainure, dans sa direction d'étendue, traverse la première pièce de jonction,
- où la partie saillante s'étend dans un plan perpendiculaire au deuxième axe longitudinal,
- où une première paroi de la rainure est inclinée en direction du premier axe longitudinal, et où une surface latérale de la partie saillante est inclinée en direction du deuxième axe longitudinal, **caractérisé**
- **en ce que**, à l'état assemblé, la partie saillante est fixée dans la rainure par un élément de sécurité, et
- **en ce que** l'élément de sécurité transperce le fond de la rainure et est fixé dans la partie saillante, ou bien en ce que l'élément de sécurité transperce la partie saillante et est fixé dans le fond de la rainure.

2. Système de jonction électrique selon la revendication 1, **caractérisé en ce que** la première pièce de jonction et la deuxième pièce de jonction présentent à chaque fois une rainure et/ou une partie saillante, de manière telle qu'une partie pleine disposée sur le côté de la pièce de jonction, placé à l'opposé du câble respectif, et formant une paroi de rainure, forme à chaque fois la partie saillante.

3. Système de jonction électrique selon l'une des revendications précédentes, **caractérisé en ce que** l'élément de sécurité est une vis, en particulier une vis de cisaillement ou une vis fixée en utilisant un couple défini.

4. Système de jonction électrique selon l'une quelconque des revendications précédentes, **caractérisé en ce que** la paroi de la rainure inclinée en direction du premier axe longitudinal est disposée sur le côté de la rainure, placé à l'opposé du câble, ou bien **en ce que** la paroi de la rainure inclinée en direction du premier axe longitudinal est disposée sur le côté de la rainure, tourné vers le câble.

5. Système de jonction électrique selon l'une quelconque des revendications précédentes, **caractérisé en ce que** la paroi de la rainure, sur le côté de la rainure placé à l'opposé du câble, s'étend parallèlement au plan perpendiculaire à l'axe longitudinal, ou bien **en ce que** la paroi de la rainure, sur le côté de la rainure tourné vers le câble, s'étend parallèlement au plan perpendiculaire à l'axe longitudinal.

6. Système de jonction électrique selon l'une quelconque des revendications précédentes, **caractérisé en ce que** les pièces de jonction sont formées en aluminium ou en alliages d'aluminium, et **en ce que** les câbles sont formés en aluminium, en cuivre ou en alliages de ces métaux.

7. Système de jonction électrique selon l'une quelconque des revendications précédentes, **caractérisé en ce que** les pièces de jonction sont recouvertes métalliquement, en particulier sous-nickelées et/ou étamées.

8. Système de jonction électrique selon l'une quelconque des revendications précédentes, **caractérisé en ce que** la pièce de jonction est assemblée avec le câble par continuité de matière, au moyen d'une soudure bord à bord, en particulier au moyen d'une soudure par friction.

9. Système de jonction électrique selon l'une quelconque des revendications précédentes, **caractérisé en ce que** les pièces de jonction s'imbriquent les unes dans les autres, en forme de coin.

10. Système de jonction électrique selon l'une quelconque des revendications précédentes, **caractérisé en ce que** les pièces de jonction sont entourées par un boîtier isolant.

11. Système de jonction électrique selon l'une quelconque des revendications précédentes, **caractérisé en ce que** le boîtier isolant est disposé sur des brides des pièces de jonction, tournées vers le câble respectif, de manière telle que des forces de traction s'exerçant en direction de l'axe longitudinal, puissent être captées par le boîtier.

12. Système de jonction électrique selon l'une quelconque des revendications précédentes, **caractérisé en ce que** le boîtier isolant est entouré par une cage métallique, en particulier par une cage en tôle d'acier.

13. Système de jonction électrique selon l'une quelconque des revendications précédentes, **caractérisé en ce qu'**il est prévu, sur le fond de la rainure, une contre-dépouille s'étendant suivant l'axe longitudinal.

14. Système de jonction électrique selon l'une quelconque des revendications précédentes, **caractérisé en ce que** la partie saillante a, sur sa pointe, un crochet d'encliquetage correspondant à la contre-dépouille.
